# EUROPÄISCHE PATENTSCHRIFT

(11) **EP 2 515 195 B1**
(45) Veröffentlichungstag und Bekanntmachung des Hinweises auf die Patenterteilung: **07.05.2014**
(21) Anmeldenummer: 11003246.3
(22) Anmeldetag: 18.04.2011
(51) Int. Cl.: G05D 1/02

(54) **System zum Steuern von Baustellenfahrzeugen**
System for controlling construction site vehicles
Système de commande d'engins de chantier

(43) Veröffentlichungstag der Anmeldung: 24.10.2012
(73) Patentinhaber: Joseph Vögele AG, 67067 Ludwigshafen (DE)
(72) Erfinder: Buschmann, Martin, Dipl.-Ing., 67435 Neustadt (DE); Weiser, Ralf, 68526 Ladenburg (DE); Eul, Achim, 68305 Mannheim (DE); Rutz, Arnold, 67065 Ludwigshafen (DE)
(74) Vertreter: Grünecker, Kinkeldey, Stockmair & Schwanhäusser

(56) Entgegenhaltungen:
- WO-A2-91/09275
- US-A- 5 897 595
- US-A1- 2006 047 377
- US-B1- 6 484 078

## Beschreibung

Die Erfindung bezieht sich auf ein System zum Steuern von Baustellenfahrzeugen. Diese Baustellenfahrzeuge können LKWs, Tieflader, Straßenfertiger, Beschicker, Walzen, Betonmischer, Bagger, Servicefahrzeuge, Fahrzeuge eines Sicherheitsdienstes und/oder Personentransportfahrzeuge sowie alle weiteren, auf einer Baustelle denkbaren Fahrzeuge umfassen.

In der Vergangenheit wurden bereits viele Vorschläge gemacht, wie Baustellen zum Aufbringen von Straßenbelag im Hinblick auf einheitlichere Arbeitsergebnisse besser überwacht, gesteuert oder dokumentiert werden könnten. Beispielsweise offenbart die DE 101 51 942 B4 ein Arbeitsmaschinen-Managementsystem, bei dem Baufahrzeuge untereinander und mit einem Baustellenbüro kommunizieren können. Die ausgetauschten Daten können sich beispielsweise auf Diebstahlinformationen, Bauprojektkosten, Teilebedarfsvorhersagen, Servicebedarfsvorhersagen, Wetterdaten öder Kraftstoffverbrauch beziehen. Die DE 60 2004 011 968 T2 beschreibt ein weiteres System zum Informationsaustausch auf Baustellen. Ein Datenaustausch zwischen mobilen Baufahrzeugen und einem Baustellenbüro erfolgt dort mittels eines Internet-Protokolls. Die DE 10 2008 054 481 A1 beschreibt ein Asphaltierungssystem, bei dem die Navigation von Baufahrzeugen auf einem sogenannten Positionstemperaturmodell beruht. Aufgrund der zunächst abgeschätzten und dann gemessenen Asphalttemperatur bestimmt das System, wo Verdichtungsfahrzeuge am Günstigsten eingesetzt werden.

Gemäß der US 2004/0260504 A1 können asphaltbezogene Messdaten in einem drahtlosen Kommunikationssystem übertragen werden. Die DE 101 51 942 B4 beschreibt, dass jedem Baufahrzeug eine bestimmte Identifikation zugeteilt wird. Ein weiteres Flottenmanagementsystem für Baufahrzeuge geht aus der US 6,862,521 B1 hervor. Die WO 00/70150 A1 beschreibt eine Messung der Asphalttemperatur an einem Straßenfertiger. Die gemessenen Temperaturdaten werden an einen Verdichter weitergegeben, der dem Straßenfertiger folgt.

Die DE 197 44 772 A1 beschreibt die Bestimmung eines lokalen Verdichtungsniveaus, um einem Verdichter mitzuteilen, wie oft er über das angegebene Gebiet fahren muss. Die DE 694 16 006 T2 beschreibt eine weitere Variante zur Steuerung eines Verdichters, beispielsweise einer Walze. Die Navigation einer Verdichtungswalze in Abhängigkeit vom Verdichtungsgrad beim Straßenbau wird auch in der EP 1 897 997 A2 behandelt. Ein ananderes Verfahren zur Erstellung einer individuellen Verkehrsprognose für ein Fahrzeug, das jedoch keinerlei Bezug zu Baustellen hat, ist aus der DE 10 2006 021 015 A1 bekannt.

Ein System zur Steuerung von fahrbaren Arbeitsmaschinen ist zudem aus der US 2006/0047377 A1 bekannt. Das darin beschriebene System umfasst die Kommunikation einer Leitzentrale mit den fahrbaren Arbeitsmaschinen, wobei in dem System eine von der Leitzentrale bereitgestellte, digitale Karte vorgesehen ist. Schließlich ist aus der WO 91/09275 A2 ein Fahrzeugortungs- und Navigationssystem für ein autonomes Fahren von Arbeitsmaschinen bekannt. Das darin beschriebene System umfasst ein Ortungssystem mit dem die aktuelle Position des jeweiligen Fahrzeugs bestimmt wird und eine Fahrzeugsnavigation, mit der das Fahrzeug auf vorgegebenen Routen gesteuert wird. Zur Vermeidung von Kollisionen umfasst das Navigationssystem eine Hinderniserkennung und -vermeidung.

Aufgabe der vorliegenden Erfindung ist es, ein System zum Steuern von Baustellenfahrzeugen dahingehend zu verbessern, dass ein möglichst reibungsloser Betriebsablauf der Baustelle ermöglicht wird und gegebenenfalls das Arbeitsergebnis der Baustellenprozesse qualitativ besser wird.

Diese Aufgabe wird gelöst durch ein System mit den Merkmalen des Anspruchs 1. Vorteilhafte Weiterbildungen der Erfindung sind in den Unteransprüchen angegeben.

Das erfindungsgemäße System weist eine Vielzahl von Baustellenfahrzeugen eines oder mehrerer der eingangs genannten Typen auf. Ferner umfasst das System eine Leitzentrale. Auf Kommunikationskanälen sind Daten von der Leitzentrale an die Baustellenfahrzeuge und/oder in umgekehrter Richtung übertragbar. In der Leitzentrale ist ferner mindestens eine digitale Karte gespeichert. Auf mindestens einer der gespeicherten digitalen Karten ist eine Baustelle verzeichnet, die von den Baustellenfahrzeugen angesteuert wird oder auf der die Baustellenfahrzeuge arbeiten sollen. In dieser digitalen Karte ist für einzelne Wegeabschnitte zusätzlich zu dem Verlauf des jeweiligen Wegeabschnitts mindestens eine Zusatzinformation hinterlegt. Außerdem ist ein Navigationsmodul vorgesehen und dazu eingerichtet, anhand der mindestens einen digitalen Karte Navigationsempfehlungen für die Baustellenfahrzeuge zu erzeugen. Der Vorteil der Erfindung liegt darin, dass anhand der Zusatzinformationen die Navigationsempfehlungen für die Baustellenfahrzeuge nicht nur im Hinblick auf eine möglichst kurze Route, sondern im Hinblick auf weitere oder andere, baustellenrelevante Parameter hin optimiert werden können.

Vorzugsweise ist das Navigationsmodul in Form eines Computerprogramms implementiert. Die ermöglicht eine besonders schnelle, sichere Erfassung und Auswertung aller relevanten Daten sowie deren Umsetzung in Navigationsempfehlungen. In dem Computerprogramm können (gegebenenfalls änderbare) Regeln hinterlegt sein, auf welche Weise und mit welchen Gewichtungen unterschiedliche Informationen in die Navigationsempfehlungen einfließen.

Das Navigationsmodul könnte in der Leitzentrale implementiert sein. Dort würden die Navigationsempfehlungen erzeugt, die dann über die Kommunikationskanäle an die einzelnen nen Baufahrzeuge übermittelt werden. Alternativ dazu wäre es auch denkbar, dass ein Navigationsmodul in einem Baustellenfahrzeug implementiert ist. Über die Kommunikationskanäle könnte das Baustellenfahrzeug die digitale Karte bzw. die darin gespeicherten Informationen von der Leitzentrale abrufen, um diese Information anschließend im bordeigenen Navigationsmodul in Navigationsempfehlungen umzusetzen.

Zweckmäßig ist es, wenn der Verlauf und/oder die gespeicherten Zusatzinformationen eines Wegeabschnitts in der digitalen Karte veränderbar sind. Dies ist besonders günstig im Hinblick auf die der Erfindung zugrunde liegenden Baustellenprozesse, bei denen sich Wegeabschnitte und deren Zustand oder Befahrbedingungen verändern können. Dies gilt insbesondere, wenn es sich um eine Baustelle und entsprechende Wegeabschnitte im Straßenbau, im Gleisbau, im Flughafenbau oder bei anderen, sehr großen Bauprojekten handelt.

Prinzipiell sind beliebige baustellenrelevante Zusatzinformationen in der digitalen Karte für die einzelnen Wegabschnitte hinterlegbar. Beispielsweise kann es sich bei der mindestens einen Zusatzinformation um Koordinaten temporärer Fahrwege oder temporärer Baustellenzufahrten handeln, deren Lage sich während des Baustellenprozesses verändert. Ebenso kann es sich um die Koordinaten und die Richtung temporärer Einbahnstraßenabschnitte handeln. Günstig ist es insbesondere, wenn sich mindestens eine Zusatzinformation auf den Zustand eines Wegeabschnitts bezieht und so beispielsweise den aktuellen Straßenbelag, die Schlaglochdichte, einen Erschütterungsgrad für die über den Wegeabschnitt fahrenden Baufahrzeuge (z. B. in Abhängigkeit von der Fahrzeuggeschwindigkeit) oder das Vorhandensein von Eis- und Schneeglätte repräsentieren. Die Zusatzinformationen können sich auch auf eine Kennzahl zu einer maximalen Achslast, eine Kennzahl zu einer maximalen Fahrzeug- oder Wegebreite, eine Kennzahl zu Kurvenradien, eine Kennzahl zu einer Höhenbeschränkung, eine Kennzahl zu einer maximalen Geschwindigkeit, die Betriebszeiten, Stauinformationen und/oder Informationen zur temporären Fahrverboten beziehen. Alle diese Informationen sind prinzipiell baustellenrelevant und können dazu genutzt werden, die Navigationsempfehlungen für die Baustellenfahrzeuge zu optimieren im Hinblick auf einen möglichst reibungslosen, schnellen und störungsfreien Ablauf des Bauprozesses.

An Baustellen müssen Baustellenfahrzeuge zum Anfahren teilweise Wirtschaftswege und provisorisch angelegte Wege sowie temporär vorhandene Zu- und Abfahrten und gegebenenfalls Einbahnstrassen zum oder auf dem Baustellenareal benutzen. Die Erfindung ermöglicht es, Informationen über solche Wege in die Navigation einzubeziehen.

Häufig sind temporäre Zufahrtswege nicht ideal befestigt, sodass sie für schwere Baustellenfahrzeuge oberhalb einer bestimmten Achslast nicht ausgelegt sind und bei schlechten Wetterverhältnissen eingeschränkt oder sogar gar nicht befahrbar sind. Aus Zeit- und Kostengründen sowie zum Vermeiden eines zu starken Eingriffs in das umliegende Gelände werden solche Baustellenwege häufig in ihrer Breite begrenzt. Dies führt dazu, dass Baustellenfahrzeuge auf den temporären Wegen eine bestimmte Maximalbreite nicht überschreiten dürfen, damit sie diese Wege überhaupt befahren oder sich gegenseitig passieren können. Oft werden solche temporären Wege daher nur für den Einbahnverkehr freigegeben.

Für größere Baustellenfahrzeuge sind häufig die Kurvenradien auf temporären Wirtschaftswegen zu gering. Daher besteht die Gefahr, dass größere Baustellenfahrzeuge wie Lastwagen oder Sattelschlepper beim Befahren dieser Wege in den unbefestigten Randstreifen gelangen. Die Berücksichtigung von Kennzahlen über Kurvenradien von Wegabschnitten verhindert die dadurch bedingten Staus, Wendemanöver und Zeitverzögerungen.

Ebenfalls findet man auf vielen Baustellen das Überbrücken von Wegen durch Versorgungsleitungen, beispielsweise in Form von Schlauchbrücken. Solche Schlauchbrücken oder andere Brückenbauwerke können die Höhe begrenzen, die Fahrzeuge auf dem betreffenden Wegeabschnitt haben dürfen. Ähnlich wie bei Wegen mit engen Kurvenradien besteht auch hier die Gefahr, dass beim irrtümlichen Befahren solcher Zufahrtswege Behinderungen des nachfolgenden Verkehrs durch Rangieren oder Wendemanöver auftreten. Im schlimmsten Fall können dabei Sach- oder Personenschäden eintreten, die durch die Berücksichtigung entsprechender Informationen im erfindungsgemäßen System verringert oder sogar ganz vermieden werden. Damit trägt das erfindungsgemäße System erheblich zur Sicherheit auf der Baustelle bei.

Bei den oben genannten Kennzahlen für den Zustand von Wegeabschnitten, die Achslast, die Wegebreite, Kurvenradien oder Ähnlichem muss es sich nicht um tatsächliche Zahlen handeln, sondern die entsprechende Information kann auch in anderer Form hinterlegt sein, beispielsweise in Form von Kategorien (A, B, C, ...). Beispielsweise kann "A" einen besonders gut Zustand eines Wegeabschnitts, einen Kurvenradius unterhalb von 10 Metern, eine Höhenbeschränkung bei 3,0 Metern oder ähnliches kennzeichnen, "B" einen etwas schlechteren Zustand des Wegeabschnitts, einen Kurvenradius zwischen 10 und 14 Metern, eine Höhenbeschränkung auf 3,30 Meter usw.

Besondere Vorteile entfaltet das erfindungsgemäße System, wenn die Zusatzinformation eine Information über aktuell auf dem jeweiligen Wegeabschnitt befindliche Baustellenfahrzeuge umfasst. Dies ermöglicht es, den Baustellenverkehr besser zu verteilen, sodass einzelne Wegeabschnitte nicht zu stark befahren werden. Dadurch verringert sich die Gefahr von Staus und einer übermäßigen Belastung einzelner Wegeabschnitte.

Die Zusatzinformation der digitalen Karte kann in Form einer editierbaren Datei für den jeweils zugeordneten Wegeabschnitt gespeichert sein. Dies ermöglicht es, die jeweiligen Zusatzinformationen zu aktualisieren und/oder um weitere Zusatzinformationen zu ergänzen.

Vorzugsweise kann die Zusatzinformation editierbar sein unter Berücksichtigung von Daten, die von einem Baustellenfahrzeug an die Leitzentrale übermittelt werden. Wenn am Baustellenfahrzeug beispielsweise erkannt wird, dass eine Zusatzinformation zu einem bestimmten Wegeabschnitt nicht aktuell ist (weil z. B. sich die Breite, die Höhenbeschränkung oder eine Einbahnstraßenregelung verändert haben), kann das Baustellenfahrzeug entsprechende Korrekturinformationen an die Leitzentrale übermitteln, damit die digitale Karte dort stets auf dem aktuellen Stand gehalten wird.

Insbesondere ist es denkbar, dass von einem Baustellenfahrzeug Standort- und Zeitinformationen an die Leitzentrale übermittelbar sind. Diese Standort- und Zeitinformationen geben an, zu welchem Zeitpunkt sich das betreffende Baustellenfahrzeug an einem bestimmten Punkt befindet bzw. befunden hat. Das Erfassen und Verarbeiten dieser Standort- und Zeitinformationen ermöglicht in der Leitzentrale eine Berechnung der tatsächlichen Fahrzeit auf bestimmten Routen, die den tatsächlichen Verhältnissen (beispielsweise Wetter und Stau) Rechnung trägt. Diese Fahrzeitenberechnung ist deutlich präziser als eine Fahrzeitenabschätzung allein auf der Basis der Länge einer bestimmten Route.

Das erfindungsgemäße System kann Fahrzeugortungsmittel zum Orten der verschiedenen Baustellenfahrzeuge umfassen. Solche Fahrzeugortungsmittel können beispielsweise in Form von GNSS-Empfängern (GNSS: Globales Navigationssatellitensytsem), beispielsweise GPS, an Bord der einzelnen Baustellenfahrzeuge realisiert sein. Denkbar sind auch Lesegeräte, mit denen an bestimmten Punkten Markierungen zur Identifikationen einzelner Baustellenfahrzeuge erkannt werden. Solche Markierungen können drahtlos (beispielsweise optisch) oder drahtgebunden (beispielsweise induktiv) erfasst werden. Bei den Markierungen kann es sich z. B. um RIFD-Tags oder um ausgedruckte Markierungen wie Barcodes handeln.

In einer vorteilhaften Variante der Erfindung ist das Navigationsmodul dazu eingerichtet, für bestimmte Baustellenfahrzeuge unter Berücksichtigung von Kennzahlen zum Zustand mehrer Wegeabschnitte eine Navigationsempfehlung für eine möglichst erschütterungsarme Fahrtroute zu generieren. Bei den betreffenden Baustellenfahrzeugen kann es sich insbesondere um Transportfahrzeuge zum Transportieren von Asphaltmaterial zur Baustelle handeln. Wenn sich Wege sich in schlechtem Zustand befinden, also z.B. viele Schlaglöcher aufweisen, tragen die beim Befahren erzeugten Erschütterungen zur Entmischung des Asphalts bei, da sich bei der Bewegung des Mischguts schwerere Komponenten von den leichteren Anteilen trennen. Eine Entmischung des Asphalts tritt deshalb dann auf, wenn das Transportfahrzeug lange Anfahrtswege auf schlechten Wegstrecken zu bewältigen hat. Durch die Wahl von rüttelarmen Zufahrtswegen kann die Entmischung des Asphalts auf dem Lieferfahrzeug wirkungsvoll unterdrückt werden. Da die Entmischung ausbleibt oder zumindest stark verringert wird, kann mit dem Asphalt anschließend ein Straßenbelag sehr hoher Qualität erzeugt werden.

Eine Anzeigevorrichtung an der Leitzentrale und/oder an einem Baustellenfahrzeug kann zum Anzeigen der mindestens einen digitalen Karte eingerichtet sein. Auf diese Weise kann ein Koordinator in der Leitzentrale oder ein Fahrer eines Baustellenfahrzeugs schnell eine Übersicht über die zu Verfügung stehenden Wegeabschnitte, deren Qualität, Staus oder Ähnliches erhalten.

Vorzugsweise ist dabei an der Anzeigevorrichtung die aktuelle Position mehrerer Baustellenfahrzeuge anzeigbar. Damit erkennt der Bediener, welche Wegeabschnitte bereits stark befahren oder von einem langsam fahrenden Fahrzeug blockiert werden, sodass weniger stark befahrene oder nicht blockierte Ausweichstrecken genommen werden können.

Im Folgenden wird ein vorteilhaftes Ausführungsbeispiel der Erfindung anhand einer Zeichnung näher dargestellt. Im Einzelnen zeigen:
- Figur 1: eine schematische Darstellung eines erfindungsgemäßen Systems und
- Figur 2: einen Ausschnitt aus einer im erfindungsgemäßen System gespeicherten digitalen Karte.

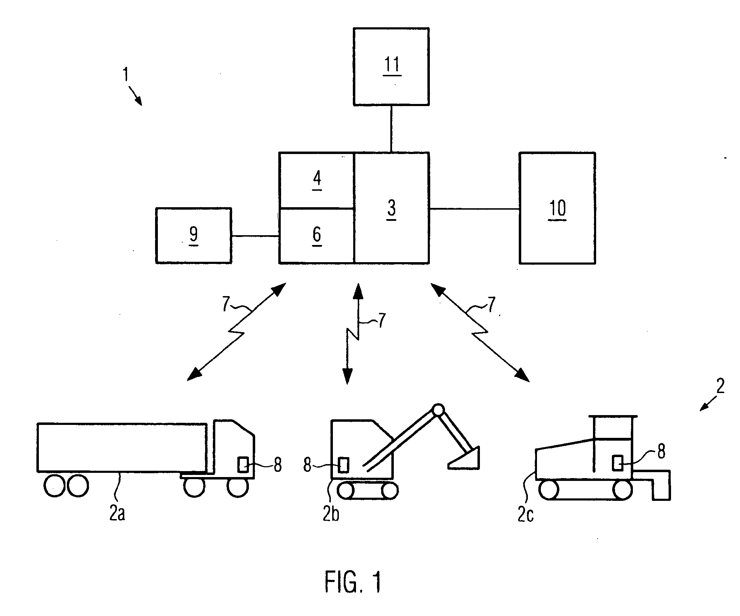

Figur 1 zeigt schematisch ein Ausführungsbeispiel eines erfindungsgemäßen Systems 1 zum Steuern von Baustellenfahrzeugen 2. Bei diesen Baustellenfahrzeugen handelt es sich im vorliegenden Beispiel um einen LKW 2a insbesondere zum Transportieren von Einbaumischgut, einen Bagger 2b und einen Straßenfertiger 2c. Die Zahl der im erfindungsgemäßen System 1 enthaltenen Baustellenfahrzeuge 2 und die einzelnen Typen von Baustellenfahrzeugen sind jedoch beliebig.

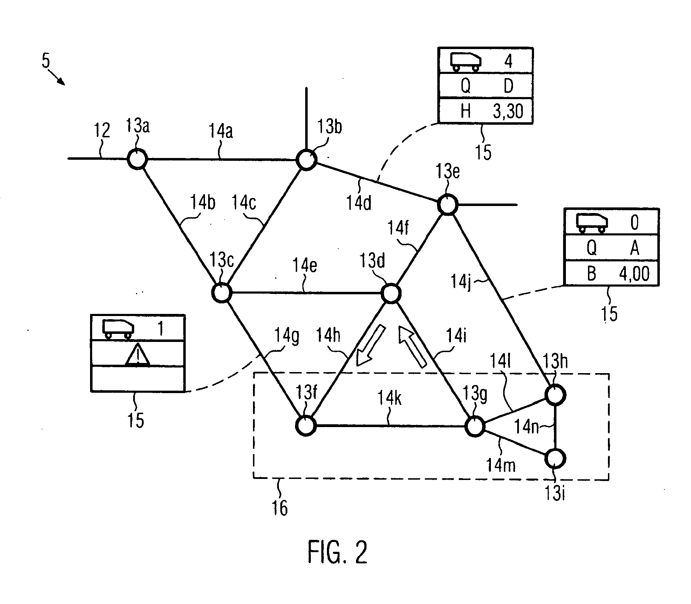

Das System 1 verfügt ferner über eine Leitzentrale 3, die sich beispielsweise in einem Baustellenbüro, einem Planungsbüro oder einem Architekturbüro befinden kann, oder auch in einem Büro eines Fuhrunternehmens oder eines Betreibers einer Baumaschinenfahrzeugflotte. Die Leitzentrale 3 umfasst einen Speicher 4, in dem mindestens eine digitale Karte 5 (siehe Figur 2) gespeichert ist. Ein in Form eines Computerprogramms implementiertes Navigationsmodul 6 ist dazu eingerichtet, unter Beachtung bestimmter Regeln Navigationsempfehlungen zu generieren. Eine Kommunikationsschnittstelle an der Leitzentrale 3, beispielsweise eine Internet-, Infrarot-, Mobilfunk-, Bluetooth- oder sonstige Schnittstelle, ist dazu eingerichtet, die vom Navigationsmodul 6 erzeugte Navigationsempfehlungen über geeignete Kommunikationskanäle 7 an die einzelnen Baustellenfahrzeuge 2 zu übermitteln. Die Baustellenfahrzeuge 2 verfügen ihrerseits über geeignete Transponder, um die über den Kommunikationskanal 7 erhaltenen Navigationsempfehlungen zu empfangen. Eine Steuereinheit am Baustellenfahrzeug 2 kann die Navigationsempfehlungen umsetzen in akustisch oder optisch angezeigte Navigationshinweise für den Fahrer des jeweiligen Baustellenfahrzeugs 2.

Jedes Baustellenfahrzeug 2 im erfindungsgemäßen System 1 ist mit einem Fahrzeugortungsmittel 8 versehen, beispielsweise einem GNSS-Empfänger (GNSS: Globales Navigationssatellitensystem). Das Fahrzeugortungsmittel 8 kann die momentane Position des betreffenden Baustellenfahrzeugs 2 ermitteln und sie zusammen mit einer Angabe über die aktuelle Uhrzeit mittels des Kommunikationskanals 7 an die Leitzentrale 3 übermitteln. Auf diese Weise erfährt die Leitzentrale 3 in regelmäßigen Abständen die aktuelle Position jedes Baustellenfahrzeugs 2.

An der Leitzentrale 3 ist eine Anzeigevorrichtung 9 vorgesehen, beispielsweise ein Monitor. Auf dieser Anzeigevorrichtung 9 kann eine im Speicher 4 gespeicherte digitale Karte 5 ausgewählt und angezeigt werden. Dabei kann gleichzeitig die aktuelle Position jedes mit dem erfindungsgemäßen System 1 erfassten Baustellenfahrzeugs 2 dargestellt werden.

Eine Messeinrichtung 10 ist mit der Leitzentrale 3 gekoppelt bzw. über eine geeignete Datenübertragungsstrecke verbunden. Die Messeinrichtung 10 kann beispielsweise eine Wetterstation sein, um aktuelle Wetterdaten zu messen und an die Leitzentrale 3 zu übermitteln. Zusätzlich kann die Leitzentrale 3 mit einer externen Informationsquelle 12 verbunden sein, beispielsweise mit dem Internet. Über die Informationsquelle 11 kann die Leitzentrale 3 weitere aktuelle und baustellenbezogene Informationen empfangen, die gegebenenfalls zusammen mit den Wetterdaten im Navigationsmodul 6 zu Navigationsempfehlungen verarbeitet werden.

Figur 2 zeigt eine Darstellung einer digitalen Karte 5, die im Speicher 4 der Leitzentrale 3 gespeichert ist und auf der Anzeigevorrichtung 9 dargestellt werden kann. Diese digitale Karte 5 umfasst ein Wegenetz 12, das mehrere Knotenpunkte 13 (im Ausführungsbeispiel die Knotenpunkte 13a bis 13e) sowie mehrere die Knotenpunkte 13 verbindende Wegeabschnitte 14 (im vorliegenden Beispiel die Wegeabschnitte 14a bis 14n) aufweist. Für jeden Wegeabschnitt 14a bis 14n sind in der digitalen Karte 5 ein Verlauf sowie mindestens eine, vorzugsweise aber mehrere Zusatzinformationen 15 gespeichert.

Diese Zusatzinformationen 15 sind exemplarisch für die Wegeabschnitte 14d, 14g und 14j dargestellt. Für den Wegeabschnitt 14d zeigt die digitale Karte 5 als Zusatzinformation 15, dass sich auf diesen Wegeabschnitt 14d momentan vier Baustellenfahrzeuge befinden. Der Straßenzustand dieses Wegeabschnitts 14d ist eher schlecht. Dies wird dadurch angezeigt, dass eine Kennzahl für den Straßenzustand bzw. dessen Qualität (Q) nur in die Kategorie "D" klassifiziert ist, wobei "A" den besten Straßenzustand repräsentieren würde. Die Kennzahl "D" für den Straßenzustand bezeichnet einen Wegeabschnitt, auf dem viele Unebenheiten wie Schlaglöcher vorhanden sind, und auf dem daher mit starken Erschütterungen zu rechnen ist. Die Kennzahl "3,30" in der Kategorie "H" zeigt an, dass dieser Wegeabschnitt 14d nur von Baufahrzeugen mit einer maximalen Höhe von 3,30 Metern befahren werden darf, beispielsweise wegen entsprechend niedriger Unterführungen oder Brückenbauten.

Für den Wegeabschnitt 14g ist angezeigt, dass sich auf diesem Wegeabschnitt momentan ein Baustellenfahrzeug befindet. Das Warnzeichen signalisiert, dass dieser Wegeabschnitt 14g momentan nur schwer passierbar ist, möglicherweise wegen der vom Baustellenfahrzeug 1 ausgeführten Arbeiten.

Auf dem Wegeabschnitt 14j ist momentan kein Baustellenfahrzeug 2 unterwegs. Die Kennzahl für den Zustand "Q" dieses Wegeabschnitts 14j ist mit "A" angegeben, d.h. dieser Wegeabschnitt j hat eine hervorragende Qualität. Die Kennzahl "4,00" zeigt an, dass dieser Wegeabschnitt 14j stellenweise eine Breite von nur 4,00 Metern hat.

Ein gestrichelt dargestelltes Feld 16 repräsentiert das Baustellenareal. In diesem Baustellenareal befinden sich die Knotenpunkte 13f bis 13i des Wegenetzes 12. An den Wegeabschnitten 14h, 14e stellen Pfeile als weitere Zusatzinformation 15 eine Einbahnstraßenregelung dar. Der Wegeabschnitt 14h ist demnach eine Baustellenzufahrt, während der Wegeabschnitt 14i eine Baustellenausfahrt ist.

Die Zusatzinformationen 15 sind in einer editierbaren Datei hinterlegt. Dabei kann für die gesamte digitale Karte 5 eine einzige Datei vorgesehen sein, oder es können für Ausschnitte dieser digitalen Karte 5 oder einzelne Wegeabschnitte 14 jeweils eigene Dateien gespeichert sein.

Im Betrieb des erfindungsgemäßen Systems 1 wird in der Leitzentrale 3 eine digitale Karte 5 aus dem Speicher 4 aufgerufen. Die Leitzentrale 3 erhält zudem Standortinformationen von den einzelnen Baustellenfahrzeugen 2, die der Leitzentrale über die Kommunikationskanäle 7 zugespielt werden. Außerdem erhält die Leitzentrale 3 Informationen von der Messeinrichtung 10 und der externen Informationsquelle 11.

Im Navigationsmodul 6 wird nun mittels der digitalen Karte 5 eine Navigationsempfehlung für ein bestimmtes Baustellenfahrzeug 2a bis 2c erzeugt und diesem Baustellenfahrzeug 2a bis 2c mittels des Kommunikationskanals 7 übermittelt. Das Baustellenfahrzeug 2 kann daraufhin seine Fahrtroute optimieren.

Beispielsweise soll ein LKW 2a Asphaltmaterial von einem am Knotenpunkt 13b befindlichen Mischwerk zu einem Straßenfertiger 2c transportieren, der sich am Knotenpunkt 13h auf dem Baustellenareal 16 befindet. Diese kürzeste Route zwischen den Knotenpunkten 13b und 13h läuft über die Wegeabschnitte 14b und 14j. Das Navigationsmodul 6 erkennt jedoch, dass der Zustand des Wegeabschnitts 14d nur in der Kategorie "D" aufgeführt und daher offensichtlich sehr schlecht ist. Die dort erwartenden Erschütterungen könnten das Asphaltmaterial entmischen und dessen Qualität entscheidend beeinträchtigen. Auf dem Wegeabschnitt 14g hingegen ist mit Staus oder Verzögerungen zu rechnen. Die optimale Fahrtroute für den LKW 2a verläuft daher über die Wegeabschnitte 14c, 14e, 14h, 14k und 14l. Das Navigationsmodul übermittelt eine entsprechende Navigationsempfehlung an den LKW 2a. Diese Navigationsempfehlung kann auf einer Anzeigevorrichtung 9 im Führerhaus des LKWs 2a dargestellt werden, sodass sich der Fahrer des LKWs 2a nach ihr richten kann.

Während ihrer Bewegung übermitteln die Baustellenfahrzeuge 2 in regelmäßigen Zeitabständen Standortinformationen an die Leitzentrale 3. Anhand dieser Standortinformationen und der jeweiligen Zeiten kann das Leitmodul 13 berechnen, wie lange die Baustellenfahrzeuge 2 auf den einzelnen Wegeabschnitten 14 unterwegs waren. Daraus wiederum kann das Leitmodul 3 erkennen, welche Wegeabschnitte 14 eine besonders schnelle Bewegung der Baustellenfahrzeuge 2 zulassen, sodass das Navigationsmodul 6 diese Wegeabschnitte 14 bei seinen Navigationsempfehlungen bevorzugen kann.

An der Leitzentrale 3 kann die digitale Karte 5 ständig aktualisiert werden. Dazu können die Standortinformationen der einzelnen Baustellenfahrzeuge 2 berücksichtigt werden, sowie weitere Informationen, die von der Messeinrichtung 10 oder von der externen Informationsquelle 11 bezogen werden. Außerdem kann ein Bediener die Zusatzinformationen 15 für bestimmte Wegeabschnitte 14 verändern, und es können weitere Knotenpunkte 13 oder Wegeabschnitte 14 hinzugefügt oder bestehende Knotenpunkte 13 sowie Wegeabschnitte 14 entfernt werden. Sämtliche Merkmale dieses Ausführungsbeispiels können einzeln oder in beliebigen Kombinationen zum Erfolg des erfindungsgemäßen Systems 1 beitragen.

## Patentansprüche

1. System (1) zum Steuern von Baustellenfahrzeugen (2), wobei das System (1) eine Vielzahl von Baustellenfahrzeugen (2) und eine Leitzentrale (3) aufweist, wobei Kommunikationskanäle (7) zwischen der Leitzentrale (3) und den Baustellenfahrzeugen (2) vorgesehen sind, auf denen Daten zwischen der Leitzentrale (3) und den Baustellenfahrzeugen (2) übertragbar sind, wobei ferner in der Leitzentrale (3) mindestens eine digitale Karte (5) gespeichert ist, in der für einzelne Wegeabschnitte (14) zusätzlich zu dem Verlauf des jeweiligen Wegeabschnitts mindestens eine Zusatzinformation hinterlegt ist, und wobei ein Navigationsmodul (6) vorgesehen und dazu eingerichtet ist, anhand der mindestens einen digitalen Karte (5) Navigationsempfehlungen für die Baustellenfahrzeuge (2) zu generieren, **dadurch gekennzeichnet, dass** das Navigationsmodul (6) dazu eingerichtet ist, für bestimmte Baustellenfahrzeuge (2) unter Berücksichtigung von Kennzahlen zum Zustand mehrerer Wegeabschnitte (14) eine Navigationsempfehlung für eine möglichst erschütterungsarme Fahrtroute zu generieren.

2. System nach Anspruch 1, **dadurch gekennzeichnet, dass** das Navigationsmodul (6) als ein Computerprogramm implementiert ist.

3. System nach einem der vorangehenden Ansprüche, **dadurch gekennzeichnet, dass** das Navigationsmodul (6) in der Leitzentrale (3) und/oder in einem Baustellenfahrzeug (2) implementiert ist.

4. System nach einem der vorangehenden Ansprüche, **dadurch gekennzeichnet, dass** der Verlauf und/oder die gespeicherten Zusatzinformationen (15) eines Wegeabschnitts (14) in der digitalen Karte (5) veränderbar sind.

5. System nach einem der vorangehenden Ansprüche, **dadurch gekennzeichnet, dass** die mindestens eine Zusatzinformation (15) die Koordinaten temporärer Fahrtwege, die Koordinaten temporärer Baustellenzufahrten, die Koordinaten und die Richtung temporärer Einbahnstraßenabschnitte, eine Kennzahl zum Zustand des Wegabschnitts (14), eine Kennzahl zu einer maximalen Achslast, eine Kennzahl zu einer maximalen Fahrzeug- oder Wegebreite, eine Kennzahl zu Kurvenradien, eine Kennzahl zu einer Höhenbeschränkung, eine Kennzahl zu einer maximalen Geschwindigkeit, die Betriebszeiten, Hindernisse, Stauinformationen und/oder Informationen zu temporären Fahrverboten umfasst.

6. System nach einem der vorangehenden Ansprüche, **dadurch gekennzeichnet, dass** die Zusatzinformation (15) eine Information über aktuell auf dem jeweiligen Wegeabschnitt (14) befindliche Baustellenfahrzeuge (2) umfasst.

7. System nach einem der vorangehenden Ansprüche, **dadurch gekennzeichnet, dass** die Zusatzinformation (15) in Form einer editierbaren Datei für den zugeordneten Wegeabschnitt (14) gespeichert ist.

8. System nach einem der vorangehenden Ansprüche, **dadurch gekennzeichnet, dass** die Zusatzinformation (15) editierbar ist unter Berücksichtigung von Daten, die von einem Baustellenfahrzeug (2) an die Leitzentrale (3) übermittelt sind.

9. System nach einem der vorangehenden Ansprüche, **dadurch gekennzeichnet, dass** von einem Baustellenfahrzeug (2) Standort- und Zeitinformationen an die Leitzentrale (3) übermittelbar sind.

10. System nach einem der vorangehenden Ansprüche, **dadurch gekennzeichnet, dass** das System Fahrzeugortungsmittel (8) zum Orten der Baustellenfahrzeuge (2) umfasst.

11. System nach einem der vorangehenden Ansprüche, **dadurch gekennzeichnet, dass** an der Leitzentrale (3) und/oder an einem Baustellenfahrzeug (2) eine Anzeigevorrichtung (9) zum Anzeigen der mindestens einen digitalen Karte (5) vorgesehen ist.

12. System nach Anspruch 11, **dadurch gekennzeichnet, dass** an der Anzeigevorrichtung (9) die aktuellen Positionen mehrerer Baustellenfahrzeuge (2) anzeigbar sind.

## Claims

1. System (1) for controlling construction site vehicles (2), the system (1) comprising a plurality of construction site vehicles (2) and a control center (3), wherein communication channels (7) are provided between the control center (3) and the construction site vehicles (2) on which data can be transmitted between the control center (3) and the construction site vehicles (2), wherein furthermore in the control center (3) at least one digital map (5) is stored, in which for individual road sections (14), in addition to the route of the respective road section, at least one additional piece of information is stored, and wherein a navigation module (6) is provided and designed to generate, with reference to the at least one digital map (5), navigation recommendations for the construction site vehicles (2),
**characterized in that** the navigation module (6) is designed to generate a navigation recommendation for a travel route minimizing shaking for certain construction site vehicles (2) taking into consideration characteristic numbers for the condition of several road sections (14).

2. System according to claim 1, **characterized in that** the navigation module (6) is implemented as a computer program.

3. System according to one of the preceding claims, **characterized in that** the navigation module (6) is implemented in the control center (3) and/or in a construction site vehicle (2).

4. System according to one of the preceding claims, **characterized in that** the route and/or the stored additional information (15) of a road section (14) can be changed in the digital map (5).

5. System according to one of the preceding claims, **characterized in that** the at least one additional piece of information (15) comprises the coordinates of temporary roadways, the coordinates of temporary site approach roads, the coordinates and the direction of temporary one-way road sections, a characteristic number of the condition of the road section (14), a characteristic number of a maximal axle load, a characteristic number of a maximal vehicle or road width, a characteristic number of curve radii, a characteristic number of a height restriction, a characteristic number of a maximal speed, the operation times, obstacles, traffic jam information and/or information on temporary driving bans.

6. System according to one of the preceding claims, **characterized in that** the additional information (15) comprises information on construction site vehicles (2) currently present on the respective road section (14).

7. System according to one of the preceding claims, **characterized in that** the additional information (15) is stored in the form of an editable file for the allocated road section (14).

8. System according to one of the preceding claims, **characterized in that** the additional information (15) can be edited taking into consideration data transmitted from a construction site vehicle (2) to the control center (3).

9. System according to one of the preceding claims, **characterized in that** information on locations and time can be transmitted from a construction site vehicle (2) to the control center (3).

10. System according to one of the preceding claims, **characterized in that** the system comprises vehicle detection means (8) for detecting the construction site vehicles (2).

11. System according to one of the preceding claims, **characterized in that** a display device (9) for displaying the at least one digital map (5) is provided at the control center (3) and/or at a construction site vehicle (2).

12. System according to claim 11, **characterized in that** the current positions of several construction site vehicles (2) can be displayed at the display device (9).

## Revendications

1. Système (1) de commande d'engins ou de véhicules de chantier (2), système (1)
dans lequel sont prévus une pluralité d'engins de chantier (2) et une centrale de gestion (3),
dans lequel, entre la centrale de gestion (3) et les engins de chantier (2), sont prévus des canaux de communication (7) par l'intermédiaire desquels des données peuvent être transmises entre la centrale de gestion (3) et les engins de chantier (2),
dans lequel est par ailleurs mémorisée, dans la centrale de gestion (3), au moins une carte numérique (5) sur laquelle est enregistrée pour des tronçons de parcours (14) individuels, en plus du tracé du tronçon de parcours considéré, au moins une information additionnelle, et
dans lequel il est prévu un module de navigation (6) conçu en vue de générer, au regard de ladite au moins une carte numérique (5), des recommandations de navigation pour les engins de chantier (2),
**caractérisé en ce que** le module de navigation (6) est conçu en vue de générer, pour des engins de chantier (2) déterminés, et en tenant compte de nombres caractéristiques concernant l'état de plusieurs tronçons de parcours (14), une recommandation de navigation pour un itinéraire le moins chaotique possible, à savoir avec le moins de secousses possibles.

2. Système selon la revendication 1, **caractérisé en ce que** le module de navigation (6) est implémenté en tant que programme d'ordinateur.

3. Système selon l'une des revendications précédentes, **caractérisé en ce que** le module de navigation (6) est implémenté dans la centrale de gestion (3) et/ou dans un engin de chantier (2).

4. Système selon l'une des revendications précédentes, **caractérisé en ce que** le tracé et/ou les informations additionnelles (15) mémorisées d'un tronçon de parcours (14), dans la carte numérique (5), peuvent être modifiés.

5. Système selon l'une des revendications précédentes, **caractérisé en ce que** ladite au moins une information additionnelle (15) comprend les coordonnées de parcours de circulation temporaires, les coordonnées d'accès de chantier temporaires, les coordonnées et le sens de tronçons de voie à sens unique, un nombre caractéristique concernant l'état du tronçon de parcours (14), un nombre caractéristique concernant une charge maximale par essieu, un nombre caractéristique concernant une largeur maximale de véhicule ou de voie de parcours, un nombre caractéristique concernant les rayons de courbes, un nombre caractéristique concernant une limitation de hauteur, un nombre caractéristique concernant une vitesse maximale, les horaires ou temps de service, des obstacles, des informations relatives aux bouchons et/ou des informations relatives à des interdictions temporaires de circuler.

6. Système selon l'une des revendications précédentes, **caractérisé en ce que** l'information additionnelle (15) comprend une information concernant des engins de chantier (2) se trouvant actuellement sur le tronçon de parcours (14) respectivement considéré.

7. Système selon l'une des revendications précédentes, **caractérisé en ce que** l'information additionnelle (15) est mémorisée sous la forme d'un fichier de données pouvant être édité, pour le tronçon de parcours (14) associé.

8. Système selon l'une des revendications précédentes, **caractérisé en ce que** l'information additionnelle (15) peut être éditée en prenant en compte des données qui sont transmises par un engin de chantier (2) à la centrale de gestion (3).

9. Système selon l'une des revendications précédentes, **caractérisé en ce qu'**un engin de chantier (2) peut transmettre des informations de position et de temps à la centrale de gestion (3).

10. Système selon l'une des revendications précédentes, **caractérisé en ce que** le système comprend des moyens de localisation (8) d'engins ou de véhicules, destinés à localiser des engins de chantier (2).

11. Système selon l'une des revendications précédentes, **caractérisé en ce que** dans la centrale de gestion (3) et/ou sur un engin de chantier (2), est prévu un dispositif de visualisation (9) destiné à afficher ladite au moins une carte numérique (5).

12. Système selon la revendication 11, **caractérisé en ce que** sur le dispositif de visualisation (9) peuvent être affichées les positions actuelles de plusieurs engins de chantier (2).
